# EUROPÄISCHE PATENTSCHRIFT

(11) **EP 2 831 400 B1**
(45) Veröffentlichungstag und Bekanntmachung des Hinweises auf die Patenterteilung: **19.02.2025**
(21) Anmeldenummer: 13718296.0
(22) Anmeldetag: 26.03.2013
(51) Int. Cl.: F02D 41/30, F02D 13/02, F02B 17/00, F02D 41/00, F02D 41/40, F02P 15/08

(54) **VERFAHREN ZUM BETREIBEN EINER VERBRENNUNGSKRAFTMASCHINE**
METHOD FOR OPERATING AN INTERNAL COMBUSTION ENGINE
PROCÉDÉ POUR FAIRE FONCTIONNER UN MOTEUR À COMBUSTION INTERNE

(30) Priorität: 28.03.2012 DE 102012006342
(43) Veröffentlichungstag der Anmeldung: 04.02.2015
(73) Patentinhaber: Mercedes-Benz Group AG, 70372 Stuttgart (DE)
(72) Erfinder: KLENK, Rolf, 70736 Fellbach (DE); SCHERER, Christopher, 92364 Deining (DE)
(74) Vertreter: Novagraaf Group
(86) Internationale Anmeldenummer: PCT/EP2013/000907
(87) Internationale Veröffentlichungsnummer: WO 2013/143687

(56) Entgegenhaltungen:
- EP-A2- 1 484 494
- EP-A2- 1 840 357
- WO-A1-2006/063372
- DE-A1- 102004 061 142
- US-A- 6 055 948
- US-A1- 2008 271 436
- US-A1- 2011 108 001

## Beschreibung

Die Erfindung betrifft ein Verfahren zum Betreiben einer Verbrennungskraftmaschine gemäß dem Oberbegriff von Patentanspruch 1.

Die DE 102 42 226 A1 offenbart ein Verfahren zur Bildung eines zündfähigen Kraftstoff-Luft-Gemisches in einem Brennraum einer fremdgezündeten Brennkraftmaschine mit Direkteinspritzung, bei dem über mindestens einen Einlasskanal einem Brennraum Verbrennungsluft zugeführt wird. Mittels eines im Brennraum angeordneten Kraftstoffinjektors wird Kraftstoff in den Brennraum eingespritzt. Mittels mindestens einer im Brennraum angeordneten Zündkerze wird ein gebildetes Kraftstoff-Luft-Gemisch gezündet, wobei die Kraftstoffeinspritzung in mehreren Teilmengen erfolgt. Dabei ist vorgesehen, dass in einem Homogenbetrieb der Brennkraftmaschine die Kraftstoffeinspritzung derart gestaltet wird, dass eine erste und eine zweite Teilmenge im Ansaughub und eine dritte Teilmenge im Kompressionshub eingebracht werden, wobei die Zündung des gebildeten Kraftstoff-Luft-Gemisches mit einem Abstand zwischen 0° Kurbelwinkel und 100° Kurbelwinkel nach dem Einspritzende der dritten Teilmenge stattfindet.

Ferner ist in einem Schichtladebetrieb der Brennkraftmaschine vorgesehen, dass die Kraftstoffeinspritzung derart gestaltet wird, dass eine erste, eine zweite und eine dritte Teilmenge in einem Kompressionshub der Brennkraftmaschine in den Brennraum eingebracht werden, wobei die Kraftstoffeinspritzung der zweiten Teilmenge bei einem Kurbelwinkel beendet wird, der in einem Bereich zwischen 15° Kurbelwinkel vor der Zündung des gebildeten Kraftstoff-Luft-Gemisches bis 4° Kurbelwinkel nach der Zündung des gebildeten Kraftstoff-Luft-Gemisches liegt.

Der DE 10 2004 061 142 A1 ist ein Verfahren zur Steuerung einer Brennkraftmaschine als bekannt zu entnehmen. Die Brennkraftmaschine weist eine Einrichtung zur Umschaltung der wirksamen Ventilerhebungskurven von Ladungs-Wechselventilen, eine von einem Steuergerät ansteuerbare Drosselklappe sowie wenigstens ein steuerbares Einspritzelement auf, wobei vor der Umschaltung der Ventilerhebungskurven eine Erkennung der Umschaltanforderung erfolgt und prädiktiv vor Umschaltung der Ventilerhebungskurven die Drosselklappenstellung verändert wird. Dabei ist vorgesehen, dass zumindest nach der durch die Umschaltanforderung ausgelösten prädiktiven Korrektur der Drosselklappenstellung fortlaufend das gewünschte Soll- und das Ist-Drehmoment ermittelt werden und die Umschaltung der wirksamen Ventilerhebungskurve zeitverzögert zur Umschaltanforderung erfolgt, wobei der Umschaltzeitpunkt aus dem Verlauf der Abweichung des Ist- vom Soll-Drehmoment ermittelt wird.

Des Weiteren offenbart die US 2011/0108001 A1 einen selbstzündenden Benzinmotor, welcher eine Verbrennungssteuervorrichtung mit einer Einspritzdüse, die Kraftstoff direkt in einen Brennraum einspritzt, eine variable Ventileinrichtung, die eine Ventilsteuerung ändert, mindestens zwei Einlassventile, mindestens zwei Auslassventile, eine Zündkerze, die an einem zentralen Abschnitt der Verbrennungskammer positioniert ist und eine Einspritzdüse aufweist, die angrenzend an die Zündkerze in Richtung eines mittleren Abschnitts der Brennkammer positioniert ist. Das Auslassventil weist einen symmetrischen Ventilhub auf, bei dem der Hub und der Öffnungsabschnitt der mindestens zwei Auslassventile bei geringem Hub gleich sind, und das Einlassventil weist einen asymmetrischen Ventilhub auf, bei dem der Hub und der Öffnungsabschnitt der mindestens zwei Einlassventile im niedrigen Hub unterschiedlich sind. Zudem ist aus der US 2008/0271436 A1, ein Verfahren zum Betreiben einer ViertaktBrennkraftmaschine mit eine Brennkammer mit variablem Volumen, die durch einen Kolben definiert ist, der sich innerhalb eines Zylinders zwischen einem oberen Totpunkt und einem unteren Totpunkt hin- und herbewegt als bekannt zu entnehmen. Die Brennkraftmaschine weist Einlass- und Auslasskanäle, Einlass- und Auslassventile, die während wiederholter, sequentieller Auslass-, Einlass-, Kompressions- und Expansionshübe des Kolbens gesteuert werden, und ein Kraftstoff-Direkteinspritzsystem und ein Funkenzündsystem auf. Das Verfahren umfasst selektives Implementieren einer von mehreren Betriebsarten in Reaktion auf vorbestimmte Katalysator- und Motortemperaturbedingungen.

Außerdem offenbart die EP 1 484 494 A2 eine Verbrennungssteuervorrichtung und ein Verfahren für einen Motor mit Direkteinspritzung, wobei, wenn der Motor im Teillastbereich arbeitet, der Ventilöffnungs/Schließmodus eines Einlassventils und/oder eines Auslassventils so gesteuert wird, dass Abgase in einem Brennraum verbleiben. Die Steuerung erfolgt derart, dass Kraftstoff mittels eines Kraftstoffeinspritzventils in die restlichen Abgase mindestens einmal während eines Verbrennungszyklus eingespritzt wird und dass ein Luft-Kraftstoff-Gemisch in der zweiten Hälfte eines Verdichtungstaktes danach gezündet wird.

Zudem ist aus der EP 1 840 357 A2 ein Ottomotor mit Fremdzündung, der eine Steuereinrichtung umfasst als bekannt zu entnehmen. Die Steuereinrichtung ist betreibbar, wenn eine Motorbetriebszone eine Hochlastbetriebszone ist, um einen Schließzeitpunkt eines Einlassventils derart einzustellen, dass ein effektives Verdichtungsverhältnis bei 13 oder mehr gehalten wird, und einen Zündzeitpunkt zu einem Punkt innerhalb eines vorbestimmten Hubbereichs unmittelbar nach einem oberen Totpunkt eines Verdichtungshubs zu verzögern.

Schließlich offenbart die WO 2006/063372 A1 ein Verfahren zum Betreiben einer Brennkraftmaschine, wobei zumindest in einem ersten Motorbetriebsbereich sowohl externe, als auch interne Abgasrückführung durchgeführt wird. Zur Anhebung der Restgasverträglichkeit im Volllastbereich und zur Verminderung der Klopfneigung, insbesondere bei oder vor einem Klopfereignis ist vorgesehen, dass zur Verminderung der Klopfneigung, insbesondere bei oder vor einem Klopfereignis, die kinetische turbulente Energie im Zylinder - im Vergleich zu einem Referenzbetriebspunkt, vorzugsweise bei hoher Last - zumindest kurzzeitig erhöht wird, wobei der Restgasgehalt im Zylinderraum zumindest während der Erhöhung der turbulenten kinetischen Energie mittels Variieren der Öffnungszeit des Einlassventils, der Schließzeit des Einlassventils und/oder der Schließzeit des Auslassventils eingestellt wird.

Es hat sich gezeigt, dass es beim Betrieb einer Verbrennungskraftmaschine, insbesondere eines Ottomotors, mit relativ geringen Ventilhüben wenigstens eines einem Brennraum der Verbrennungskraftmaschine zugeordneten Gaswechselventils, insbesondere Einlassventils, zu Nachteilen hinsichtlich einer Ladungsbewegung des Kraftstoff-Luft-Gemisches in dem Brennraum im Vergleich zu demgegenüber größeren Ventilhüben kommen kann.

Es ist daher Aufgabe der vorliegenden Erfindung, ein Verfahren zum Betreiben einer Verbrennungskraftmaschine bereitzustellen, bei welchem die Nachteile der Ladungsbewegung zumindest sehr gering oder vermieden sind.

Diese Aufgabe wird durch ein Verfahren zum Betreiben einer Verbrennungskraftmaschine mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Bei einem solchen Verfahren zum Betreiben einer als Ottomotor ausgebildeten Verbrennungskraftmaschine eines Kraftwagens wird mittels wenigstens einer Einspritzeinrichtung wenigstens eine Einspritzung von Kraftstoff direkt in wenigstens einen Brennraum der Verbrennungskraftmaschine durchgeführt. Ferner wird mittels einer Zündeinrichtung eine Zündung eines Gemisches aus dem Kraftstoff und Luft in den Brennraum durchgeführt.

Die Verbrennungskraftmaschine wird dabei wahlweise in wenigstens einem ersten Betriebsmodus mit wenigstens einem ersten Ventilhub wenigstens eines dem Brennraum zugeordneten Gaswechselventils der Verbrennungskraftmaschine oder in wenigstens einem zweiten Betriebsmodus mit wenigstens einem zweiten Ventilhub, welcher geringer ist als der erste Ventilhub, betrieben. Mit anderen Worten werden in beiden Betriebsmodi die Einspritzung und die Zündung durchgeführt, wobei das Gaswechselventil im ersten Betriebsmodus den ersten Ventilhub und im zweiten Betriebsmodus den zweiten Ventilhub ausführt, wenn sich das Gaswechselventil öffnet und schließt. Dabei ist der zweite Ventilhub geringer als der erste Ventilhub.

Um nun Nachteile einer geringeren Ladungsbewegung des Gemisches im zweiten Betriebsmodus mit dem zweiten Ventilhub im Vergleich zum ersten Betriebsmodus mit dem ersten, größeren Ventilhub auszugleichen, wird zur Unterstützung der Ladungsbewegung im zweiten Betriebsmodus wenigstens eine weitere Einspritzung von Kraftstoff direkt in den Brennraum zeitlich vor der Zündung durchgeführt. Durch die Unterstützung der Ladungsbewegung infolge der weiteren Einspritzung kann auch eine langsamere Verbrennung im zweiten Betriebsmodus im Vergleich zum ersten Betriebsmodus vermieden werden, was zu einem effizienten Betrieb der Verbrennungskraftmaschine mit einem nur geringen Kraftstoffverbrauch und mit nur geringen CO₂-Emissionen führt. Das erfindungsgemäße Verfahren ermöglicht somit die Darstellung von Steuerzeiten des Gaswechselventils bzw. von wenigstens einer, das Gaswechselventil betätigenden Nockenwelle der Verbrennungskraftmaschine im zweiten Betriebsmodus, die zur Darstellung eines nur sehr geringen Kraftstoffverbrauchs infolge einer nur sehr geringen Ladungswechselarbeit führen.

Zudem wird die Verbrennungskraftmaschine im zweiten Betriebsmodus zumindest weitgehend in einem Homogenbetrieb betrieben. Im Homogenbetrieb ist das Gemisch im Vergleich zu einem etwaigen Schichtladebetrieb der Verbrennungskraftmaschine besonders homogen, wodurch ein besonders effizienter Betrieb der Verbrennungskraftmaschine möglich ist.

Ferner ist es vorgesehen, dass eine Last der Verbrennungskraftmaschine in einem ersten Lastbereich des zweiten Betriebsmodus mittels einer Drosselklappe, in einem zweiten Lastbereich des zweiten Betriebsmodus über eine Nockenwelle, welche wenigstens einem dem Brennraum zugeordneten Einlassventil zugeordnet ist, und in einem dritten Lastbereich des zweiten Betriebsmodus über eine Waste-Gate-Steuerung im Aufladebereich eingestellt wird.

Vorzugsweise wird die weitere Einspritzung zeitnah zur Zündung durchgeführt. Dies führt zu einer besonders vorteilhaften Unterstützung der Ladungsbewegung und somit zu einer besonders vorteilhaften Turbulenz des Gemisches insbesondere zum Zeitpunkt der Zündung, woraus eine sehr hohe Verbrennungsstabilität resultiert. Dies kommt dem effizienten Betrieb der Verbrennungskraftmaschine zugute.

Zur Darstellung einer sehr guten Ladungsbewegung und somit einer sehr guten und sich positiv auf die Verbrennungsstabilität auswirkenden Turbulenz ist vorzugsweise vorgesehen, dass die weitere Einspritzung zeitlich nach der wenigstens einen ersten Einspritzung durchgeführt wird.

Bei einer weiteren vorteilhaften Ausführungsform der Erfindung ist vorgesehen, dass zumindest im zweiten Betriebsmodus eine Mehrfunkenzündung als die Zündung durchgeführt wird. Dadurch wird eine besonders hohe Verbrennungsstabilität realisiert, woraus ein sehr effizienter Betrieb der beispielsweise als Hubkolben-Verbrennungskraftmaschine ausgebildeten Verbrennungskraftmaschine resultiert.

Die Verbrennungskraftmaschine kann auch im ersten Betriebsmodus zumindest weitgehend in einem Homogenbetrieb betrieben werden.

Der Kraftstoffverbrauch und damit die CO₂-Emissionen der Verbrennungskraftmaschine lassen sich insbesondere dann gering halten, wenn eine Lasteinstellung der Verbrennungskraftmaschine im zweiten Betriebsmodus mittels wenigstens einer in einem Ansaugtrakt der Verbrennungskraftmaschine angeordneten Drosselklappe und/oder mittels eines Aufladegrads wenigstens eines der Verbrennungskraftmaschine zugeordneten Abgasturboladers und/oder mittels einer Phasenverstellung der Nockenwelle, d.h. mittels einer Änderung der Steuerzeiten des insbesondere als Einlassventil ausgebildeten Gaswechselventils durchgeführt wird.

In weiterer vorteilhafter Ausgestaltung wird die Verbrennungskraftmaschine im zweiten Betriebsmodus betrieben, wenn wenigstens ein zumindest eine Temperatur der Verbrennungskraftmaschine charakterisierender Wert einen vorgebbaren Schwellenwert überschreitet. Der Schwellenwert liegt beispielsweise bei 50° C. Dadurch kann ein effizienter und kraftstoffverbrauchsarmer Betrieb der Verbrennungskraftmaschine gewährleistet werden.

Das Gaswechselventil ist vorzugsweise ein Einlassventil, in dessen wenigstens einer Offenstellung Luft aus einem Ansaugtrakt der Verbrennungskraftmaschine in den Brennraum einströmen kann.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

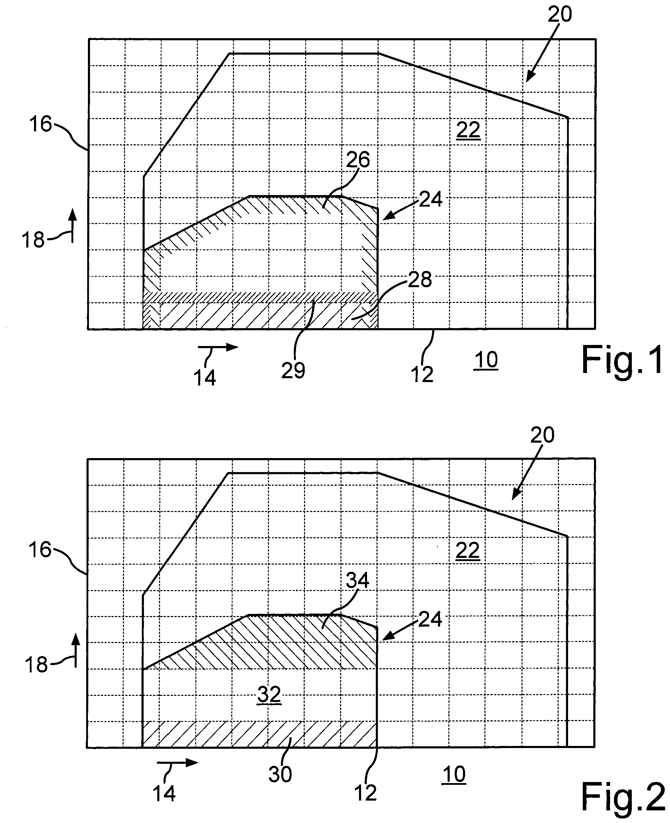

- Fig. 1: eine schematische Darstellung eines Kennfelds eines Ottomotors für einen Kraftwagen, welches einen ersten Betriebsbereich der Verbrennungskraftmaschine mit einem großen Ventilhub von Einlassventilen der Verbrennungskraftmaschine und einen zweiten Betriebsbereich mit einem kleinen Ventilhub der Einlassventile aufweist, wobei die Darstellung zur Veranschaulichung einer Ventilhubstrategie der Verbrennungskraftmaschine dient; und
- Fig. 2: eine weitere schematische Darstellung des Kennfelds gemäß Fig. 1, wobei die Darstellung zur Veranschaulichung einer Lastregelstrategie des Ottomotors dient.

Die Fig. 1 zeigt ein Diagramm 10, auf dessen Abszisse 12 die Drehzahl eines Ottomotors gemäß einem Richtungspfeil 14 ansteigend aufgetragen ist. Auf der Ordinate 16 des Diagramms 10 ist die Last des Ottomotors gemäß einem Richtungspfeil 18 ansteigend aufgetragen. In das Diagramm 10 ist das Kennfeld 20 des Ottomotors eingetragen, welches zur Veranschaulichung eines Verfahrens zum Betreiben des Ottomotors dient.

Wie der Fig. 1 zu entnehmen ist, weist das Kennfeld 20 in einen ersten Kennfeldbereich 22 sowie einen zweiten Kennfeldbereich 24 auf. Der erste Kennfeldbereich 22 korrespondiert mit einem ersten Betriebsmodus des Ottomotors, in welchem der Ottomotor mit wenigstens einer ersten Ventilerhebungskurve betrieben wird. Die erste Ventilerhebungskurve bewirkt dabei jeweilige, erste Ventilhübe von Einlassventilen des Ottomotors.

Der zweite Kennfeldbereich 24 korrespondiert mit einem zweiten Betriebsmodus des Ottomotors, in welchem der Ottomotor mit wenigstens einer zweiten Ventilerhebungskurve betrieben wird. Die zweite Ventilerhebungskurve bewirkt jeweilige, zweite Ventilhübe der Einlassventile. Die zweiten Ventilhübe sind dabei kleiner als die ersten Ventilhübe.

Die Einlassventile des Ottomotors werden beispielsweise über wenigstens eine Nockenwelle betätigt. Dies bedeutet, dass die Nockenwelle mit den Einlassventilen zusammenwirkt, so dass die Einlassventile - je nach Betriebsmodus - ihre jeweiligen Ventilhübe ausführen und sich entsprechend öffnen und schließen.

Zur Darstellung der unterschiedlichen Ventilhübe umfasst die Nockenwelle beispielsweise jeweilige, den ersten Ventilhüben zugeordnete, erste Nocken sowie jeweilige, den zweiten Ventilhüben zugeordnete, zweite Nocken. Die Nockenwelle wirkt dabei über ihre Nocken mit den Einlassventilen zusammen.

Der Ottomotor ist wahlweise in dem ersten Betriebsmodus (erster Kennfeldbereich 22) oder in dem zweiten Betriebsmodus (zweiter Kennfeldbereich 24) betreibbar. In einem sogenannten gefeuerten Betrieb des Ottomotors werden in beiden Betriebsmodi jeweilige Einspritzungen von Kraftstoff des Ottomotors direkt in Brennräume, insbesondere Zylinder, des Ottomotors durchgeführt. Dazu ist jedem der Brennräume wenigstens ein Einspritzventil zugeordnet, mittels welchem Kraftstoff direkt in den zugehörigen Brennraum eingespritzt wird.

Ferner ist den Brennräumen jeweils wenigstens eines der Einlassventile zugeordnet. Befinden sich die Einlassventile in einer Offenstellung, so kann einen Ansaugtrakt des Ottomotors durchströmende Luft über Einlasskanäle in die jeweiligen Brennräume einströmen und sich mit dem direkt in die Brennräume eingespritzten Kraftstoff vermischen. Dadurch entsteht ein Kraftstoff-Luft-Gemisch, welches gezündet wird und anschließend verbrennt.

Zur Zündung des jeweiligen Kraftstoff-Luft-Gemisches in dem Brennraum ist jedem der Brennräume beispielsweise wenigstens eine Zündkerze zugeordnet, mittels welcher ein Zündfunken erzeugbar ist. Der Zeitpunkt, zu dem der Zündfunke erzeugt und das Kraftstoff-Luft-Gemisch dadurch gezündet wird, wird als Zündzeitpunkt bezeichnet. Der Zeitpunkt, zu dem der Kraftstoff direkt in die jeweiligen Brennräume eingespritzt wird, wird als Einspritzzeitpunkt bezeichnet.

Wird der Ottomotor im zweiten Betriebsmodus betrieben, so öffnen sich die Einlassventile weniger weit als im ersten Betriebsmodus, da sie die geringeren, zweiten Ventilhübe ausführen. Mit anderen Worten geben die Einlassventile im zweiten Betriebsmodus geringere Öffnungsquerschnitte, über die die Luft in die jeweiligen Brennräume einströmen kann, frei als im ersten Betriebsmodus. Wie der Fig. 1 zu entnehmen ist, wird der Ottomotor im zweiten Betriebsmodus bei vorgebbaren Lasten und/oder Drehzahlen betrieben, während der erste Betriebsmodus bei demgegenüber höheren Lasten und/oder Drehzahlen eingestellt wird. Dies bedeutet, dass der Ottomotor bei relativ geringen Drehzahlen und/oder Lasten im zweiten Betriebsmodus und bei demgegenüber höheren Drehzahlen und/oder Lasten im ersten Betriebsmodus betrieben wird. Überschreitet die Drehzahl und/oder die Last wenigstens einen vorgebbaren Schwellenwert, so wird vom zweiten Betriebsmodus in den ersten Betriebsmodus umgeschaltet und umgekehrt.

Der Ottomotor wird im zweiten Betriebsmodus weitgehend in einem Homogenbetrieb betrieben, wobei der zweite Kennfeldbereich 24 einen Hysterese-Bereich 26 hinsichtlich Last und Drehzahl aufweist.

Um nun eine geringere Ladungsbewegung des Kraftstoff-Luft-Gemisches im zweiten Betriebsmodus im Vergleich zum ersten Betriebsmodus aufgrund der geringeren, zweiten Ventilhübe zu kompensieren bzw. zu vermeiden, wird zur Unterstützung der Ladungsbewegung des Kraftstoff-Luft-Gemisches im zweiten Betriebsmodus wenigstens eine weitere Einspritzung von Kraftstoff in die Brennräume zeitnah zur Zündung durchgeführt. Dadurch wird eine sehr vorteilhafte Ladungsbewegung bzw. Turbulenz realisiert, welche zu einer sehr hohen Verbrennungsstabilität der Verbrennung des Kraftstoff-Luft-Gemisches führt. Dadurch können Steuerzeiten der wenigstens einen Nockenwelle realisiert werden, die zur Darstellung eines sehr geringen Kraftstoffverbrauchs und damit von geringen CO₂-Emissionen des Ottomotors infolge einer nur sehr geringen Ladungswechselarbeit führen.

Vorliegend weist der zweite Kennfeldbereich 24 einen Teilbereich 28 auf, in welchem die Verbrennungskraftmaschine auch in Abhängigkeit von der Last und/oder Drehzahl betrieben wird und in welchem die wenigstens eine weitere Einspritzung von Kraftstoff direkt in die jeweiligen Brennräume zeitlich vor der Zündung, insbesondere zeitnah zur Zündung (zündungsnahe), des Kraftstoff-Luft-Gemisches durchgeführt wird. Mit anderen Worten wird dabei eine sogenannte Zündeinspritzung durchgeführt. Auch der Teilbereich 28 weist hinsichtlich Last und Drehzahl einen Hysterese-Bereich 29 auf.

Weitere mögliche Einschaltbedingungen für den zweiten Betriebsmodus sind beispielsweise, dass die Temperatur des Ottomotors, insbesondere seines Schmiermittels und/oder Kühlmittels, größer als 50° ist. Ferner wird beispielsweise lediglich dann in den zweiten Betriebsmodus geschaltet, wenn ein Aufwärmvorgang zum Aufheizen eines Katalysators des Ottomotors sowie ein Warmlauf des Ottomotors beendet sind. Der Leerlauf-Betrieb sowie ein Start-Stopp-Betrieb werden dabei auch im zweiten Betriebsmodus mit den geringeren Ventilhüben durchgeführt.

Dem Ottomotor ist vorzugsweise wenigstens ein Abgasturbolader zugeordnet, mittels welchem der Ottomotor mit verdichteter Luft versorgt, d.h. aufgeladen werden kann. Dies führt zu einem besonders effizienten Betrieb des Ottomotors.

Wie insbesondere anhand der Fig. 2 erkennbar ist, erfolgt eine Lastregelung des Ottomotors, d.h. eine Einstellung der Last des Ottomotors im ersten Kennfeldbereich 22, d.h. im ersten Betriebsmodus mittels einer im Ansaugtrakt des Ottomotors angeordneten Drosselklappe bzw. mittels der Aufladung durch den Abgasturbolader. Zur Einstellung der Last wird die Menge bzw. Masse der in die jeweiligen Brennräume einströmenden Luft eingestellt.

Im zweiten Kennfeldbereich 24 mit den zweiten, geringeren Ventilhüben erfolgt in einem Teilbereich 30 des zweiten Kennfeldbereichs 24 die Einstellung der Last mittels der Drosselklappe. In einem Teilbereich 32 des zweiten Kennfeldbereichs 24 erfolgt die Einstellung der Last über die den Einlassventilen zugeordnete und als Einlass-Nockenwelle bezeichnete Nockenwelle. In einem Teilbereich 34 des zweiten Kennfeldbereichs 24 erfolgt die Einstellung der Last (Lastregelung) über eine Waste-Gate-Steuerung im Aufladebereich. Die Waste-Gate-Steuerung bezieht sich dabei auf das Öffnen und Schließen eines als Waste-Gate bezeichneten Ventilelements einer Umgehungseinrichtung des Abgasturboladers. Die Umgehungseinrichtung ist einer Turbine des Abgasturboladers zugeordnet und umfasst einen Umgehungskanal, über welchen die Turbine durchströmendes Abgas des Ottomotors ein Turbinenrad der Turbine umgehen und somit nicht antreiben kann.

Der Umgehungskanal ist dabei mittels des Ventilelements (Waste-Gate) fluidisch versperrbar und fluidisch freigebbar. Ist der Umgehungskanal in einer Schließstellung des Ventilelements fluidisch versperrt, so kann der Umgehungskanal nicht von Abgas durchströmt werden. Dies bedeutet, dass zumindest im Wesentlichen das gesamte Abgas das Turbinenrad antreibt. In wenigstens einer Offenstellung des Ventilelements ist der Umgehungskanal fluidisch freigegeben, so dass das Abgas zumindest teilweise das Turbinenrad umgehen kann, wobei das das Turbinenrad umgehende Abgas das Turbinenrad nicht antreibt. Durch dieses Öffnen und Schließen des Ventilelements (Waste-Gate-Steuerung) kann die Leistung der Turbine und darüber der Druck der verdichteten und dem Ottomotor zuzuführenden Luft (Ladedruck) und darüber wiederum die dem Ottomotor zuzuführende Menge bzw. Masse der Luft eingestellt werden.

## Patentansprüche

1. Verfahren zum Betreiben einer als Ottomotor ausgebildeten Verbrennungskraftmaschine eines Kraftwagens, bei welchem mittels wenigstens einer Einspritzeinrichtung wenigstens eine Einspritzung von Kraftstoff direkt in wenigstens einen Brennraum der Verbrennungskraftmaschine und mittels einer Zündeinrichtung eine Zündung eines Gemisches aus dem Kraftstoff und Luft in dem Brennraum durchgeführt wird, wobei die Verbrennungskraftmaschine wahlweise in wenigstens einem ersten Betriebsmodus (22) mit wenigstens einem ersten Ventilhub wenigstens eines dem Brennraum zugeordneten Gaswechselventils der Verbrennungskraftmaschine oder in wenigstens einem zweiten Betriebsmodus (24) mit wenigstens einem zweiten Ventilhub des Gaswechselventils, welcher geringer ist als der erste Ventilhub, betrieben wird, und zur Unterstützung einer Ladungsbewegung des Gemisches im zweiten Betriebsmodus wenigstens eine weitere Einspritzung von Kraftstoff direkt in den Brennraum zeitlich vor der Zündung durchgeführt wird, **dadurch gekennzeichnet, dass** die Verbrennungskraftmaschine im zweiten Betriebsmodus zumindest weitgehend in einem Homogenbetrieb betrieben wird, in welchem das Gemisch im Vergleich zu einem etwaigen Schichtladebetrieb der Verbrennungskraftmaschine besonders homogen ist, wobei eine Last der Verbrennungskraftmaschine in einem ersten Lastbereich (30) des zweiten Betriebsmodus mittels einer Drosselklappe, in einem zweiten Lastbereich (32) des zweiten Betriebsmodus über eine Nockenwelle, welche wenigstens einem dem Brennraum zugeordneten Einlassventil zugeordnet ist, und in einem dritten Lastbereich (34) des zweiten Betriebsmodus über eine Waste-Gate-Steuerung im Aufladebereich eingestellt wird.

2. Verfahren nach Anspruch 1,
**dadurch gekennzeichnet, dass**
die weitere Einspritzung zeitlich nach der wenigstens einen ersten Einspritzung durchgeführt wird.

3. Verfahren nach einem der Ansprüche 1 oder 2,
**dadurch gekennzeichnet, dass**
im zweiten Betriebsmodus eine Mehrfunkenzündung als die Zündung durchgeführt wird.

4. Verfahren nach einem der vorhergehenden Ansprüche,
**dadurch gekennzeichnet, dass**
die Verbrennungskraftmaschine im zweiten Betriebsmodus betrieben wird, wenn wenigstens ein zumindest eine Temperatur der Verbrennungskraftmaschine charakterisierender Wert einen vorgebbaren Schwellenwert überschreitet.

## Claims

1. Method for operating an internal combustion engine, designed as a gasoline engine, of a motor vehicle, in which at least one injection of fuel directly into at least one combustion chamber of the internal combustion engine is carried out by means of at least one injection device and an ignition of a mixture of the fuel and air in the combustion chamber is carried out by means of an ignition device, the internal combustion engine being operated optionally in at least one first operating mode (22) with at least one first valve lift of at least one gas exchange valve of the internal combustion engine assigned to the combustion chamber or in at least one second operating mode (24) with at least one second valve lift of the gas exchange valve, which is smaller than the first valve lift, and
for supporting a charge motion of the mixture in the second operating mode, at least one further injection of fuel directly into the combustion chamber being carried out before ignition, **characterized in that** in the second operating mode, the internal combustion engine is operated at least largely in a homogeneous charge mode in which the mixture is particularly homogeneous compared with a possible stratified charge mode of the internal combustion engine, a load of the internal combustion engine being set in a first load range (30) of the second operating mode by means of a throttle valve, in a second load range (32) of the second operating mode via a camshaft which is assigned to at least one inlet valve assigned to the combustion chamber, and in a third load range (34) of the second operating mode via a waste gate control mechanism in the charging range.

2. Method according to claim 1, **characterized in that**
the further injection is carried out after the at least one first injection.

3. Method according to either claim 1 or claim 2,
**characterized in that**
in the second operating mode, a multipoint ignition is carried out as the ignition.

4. Method according to any of the preceding claims,
**characterized in that**
the internal combustion engine is operated in the second operating mode if at least one value characterizing at least one temperature of the internal combustion engine exceeds a specifiable threshold value.

## Revendications

1. Procédé permettant de faire fonctionner un moteur à combustion interne, réalisé sous forme de moteur à étincelles, d'un véhicule automobile, dans lequel au moins une injection de carburant est effectuée directement dans au moins une chambre de combustion du moteur à combustion interne au moyen d'au moins un dispositif d'injection et un allumage d'un mélange du carburant et d'air dans la chambre de combustion est effectué au moyen d'un dispositif d'allumage, dans lequel le moteur à combustion interne fonctionne au choix dans au moins un premier mode de fonctionnement (22) comportant au moins une première levée de soupape d'au moins une soupape d'échange de gaz du moteur à combustion interne associée à la chambre de combustion ou dans au moins un second mode de fonctionnement (24) comportant au moins une seconde levée de soupape de la soupape d'échange de gaz qui est inférieure à la première levée de soupape, et
pour la prise en charge d'un déplacement de charge du mélange dans le second mode de fonctionnement, au moins une autre injection de carburant est effectuée directement dans la chambre de combustion temporellement avant l'allumage, **caractérisé en ce que,** dans le second mode de fonctionnement, le moteur à combustion interne fonctionne au moins en grande partie dans un fonctionnement homogène dans lequel le mélange est particulièrement homogène par rapport à un éventuel fonctionnement de charge en mode stratifié du moteur à combustion interne, dans lequel une charge du moteur à combustion interne est réglée dans une première plage de charge (30) du second mode de fonctionnement au moyen d'un papillon des gaz, dans une deuxième plage de charge (32) du second mode de fonctionnement par l'intermédiaire d'un arbre à cames qui est associé à au moins une soupape d'admission associée à la chambre de combustion, et dans une troisième plage de charge (34) du second mode de fonctionnement par l'intermédiaire d'une commande de soupape de décharge dans la zone de suralimentation.

2. Procédé selon la revendication 1, **caractérisé en ce que**
l'autre injection est effectuée temporellement après l'au moins une première injection.

3. Procédé selon l'une des revendications 1 ou 2,
**caractérisé en ce que**
dans le second mode de fonctionnement, un allumage à plus d'étincelles que l'allumage est effectué.

4. Procédé selon l'une des revendications précédentes,
**caractérisé en ce que**
le moteur à combustion interne fonctionne dans le second mode de fonctionnement lorsqu'au moins une valeur caractérisant au moins une température du moteur à combustion interne dépasse une valeur seuil pouvant être prédéfinie.
